# EUROPEAN PATENT SPECIFICATION

(11) **EP 3 979 108 B1**
(45) Date of publication and mention of the grant of the patent: **17.05.2023**
(21) Application number: 21189148.6
(22) Date of filing: 02.08.2021
(51) Int. Cl.: H04L 9/40, G06F 21/30, G06F 21/36, G06F 21/31, H04L 9/32, G06F 3/0488, G06F 3/04886

(54) **ELECTRONIC COMMUNICATION DEVICE FOR PERFORMING AN AUTHENTICATION OPERATION**
ELEKTRONISCHE KOMMUNIKATIONSVORRICHTUNG ZUR DURCHFÜHRUNG EINES AUTHENTIFIZIERUNGSVORGANGS
DISPOSITIF DE COMMUNICATION ÉLECTRONIQUE PERMETTANT D'EFFECTUER UNE OPÉRATION D'AUTHENTIFICATION

(30) Priority: 30.09.2020 EP 20199393
(43) Date of publication of application: 06.04.2022
(73) Proprietor: Rubean AG, 81379 München (DE)
(72) Inventor: SPITZ, Stephan, 85757 Karlsfeld (DE)
(74) Representative: Patentship Patentanwaltsgesellschaft mbH

(56) References cited:
- EP-A1- 1 475 721
- US-A- 6 141 751
- US-A1- 2006 206 919

## Description

### TECHNICAL FIELD

The invention relates to secure electronic transactions. More specifically, the invention relates to an electronic communication device, in particular a mobile electronic communication device, such as a smartphone, for performing a secure authentication operation using a PIN pad.

### BACKGROUND OF THE INVENTION

More and more electronic transactions can be performed using a mobile electronic communication device, such as a smartphone. In order to increase the security of such electronic transactions often a successful authentication by a user of the device is required. An authentication operation often used, for instance, for unlocking a mobile electronic communication device, online banking or online payment is the entry of a usually 4-digit PIN (personal identification number), an eCode or TAN (transaction authentication number) by the user via a physical PIN pad or a virtual PIN pad displayed on a touch display of the mobile electronic communication device.

Conventionally a lot of electronic payment transactions between a merchant and a customer, who wants to pay, for instance, for goods or services of the merchant, often involve an interaction between a point-of-sale (POS) terminal of the merchant and a payment card (e.g. credit card or debit card) of the customer. After the customer interfaces the payment card with the POS terminal, and the POS terminal reads the account number from the payment card, the POS terminal may generate an online authorization request (e.g. authorization amount, and account number), and transmit the authorization request to a payment server. If the customer's account has a credit or balance that is sufficient to process the payment, the payment server generally settles the authorized amount with the customer's account, generates an authorization response message, and transmits the authorization response message to the POS terminal.

Document US 2006/206919 A1 discloses a method for authenticating a user for use of a server computing device.

Due to the widespread adoption of smartphones, tablet computers and other types of COTS (commercial-off-the-shelf) devices in more and more electronic payment transactions POS terminals are being replaced, for instance, by smartphones in that for processing a payment transaction a smartphone of a merchant interacts with a payment card and/or another smartphone of a customer. Often the authorization of the payment transaction requires the customer to enter a PIN or the like, i.e. security relevant data of the customer, into a virtual or physical PIN pad of the merchant smartphone and/or customer smartphone. Therefore, it has to be ensured that the security relevant data of the customer for authorizing the payment transaction are processed by the merchant smartphone and/or customer smartphone in a secure manner.

### SUMMARY OF THE INVENTION

It is an object of the invention to provide an electronic communication device, in particular a mobile electronic communication device, such as a smartphone, and an authentication server for performing a secure authentication operation using a PIN pad, in particular a virtual PIN pad of the electronic communication device.

The foregoing and other objects are achieved by the subject matter of the independent claims. Further embodiments and implementation forms are apparent from the dependent claims, the description and the figures.

According to a first aspect an electronic communication device for performing an authentication session, in particular for a payment transaction is provided. In an embodiment, the electronic communication device is a mobile electronic communication device, in particular a smartphone.

The electronic communication device comprises a communication interface configured to receive for the authentication session a random integer offset value from an authentication server. The electronic communication device further comprises a PIN pad configured to generate, in response to each of a sequence of operations of the PIN pad by a user, a respective PIN pad signal and a processing circuitry configured to generate based on each PIN pad signal a respective integer value and to obfuscate the respective integer value by adding the random integer offset value to the respective integer value. The communication interface of the electronic communication device is further configured to transmit the obfuscated integer values to the authentication server for processing the authentication session.

In an embodiment, the processing circuitry is further configured to encrypt the obfuscated integer values and the communication interface is configured to transmit the encrypted obfuscated integer values to the authentication server.

In an embodiment, the electronic communication device further comprises a memory configured to store the obfuscated integer values during the authentication session.

In an embodiment, the processing circuitry is configured to obfuscate the respective integer value by adding the random integer offset value to the respective integer value and performing a modulo operation.

In an embodiment, the communication interface is configured to receive from the authentication server for a further authentication session a further random integer offset value, wherein the PIN pad is further configured to generate, in response to each of a further sequence of operations of the PIN pad by the user, a respective further PIN pad signal. The processing circuitry is further configured to generate based on each further PIN pad signal a respective further integer value and to obfuscate the respective further integer value by adding the further random integer offset value to the respective further integer value. The communication interface is further configured to transmit the obfuscated further integer values to the authentication server for processing the further authentication session.

In an embodiment, the electronic communication device comprises a touch display and the PIN pad is a virtual PIN pad displayed on the touch display of the electronic communication device.

In an embodiment, the virtual PIN pad comprises a plurality of graphical symbols and the touch display is configured to sequentially display a plurality of image frames, including a first image frame and a second image frame, wherein the first image frame, for each of the plurality of graphical symbols, comprises a first portion of the respective graphical symbol and wherein the second image frame, for one or more of the plurality of graphical symbols, comprises a second portion of the respective graphical symbol.

In an embodiment, the processing circuitry is further configured to change, for each authentication session, a position and/or a size of the virtual PIN pad displayed by the touch display.

In an embodiment, the plurality of image frames comprises a third image frame, wherein the third image frame, for one or more of the plurality of graphical symbols, comprises the first portion of the respective graphical symbol.

In an embodiment, the plurality of image frames comprises a fourth image frame, wherein the fourth image frame, for one or more of the plurality of graphical symbols, comprises a portion of a different graphical symbol of the plurality of graphical symbols.

In an embodiment, for one or more of the plurality of graphical symbols, the respective graphical symbol is a combination of the first portion and the second portion of the respective graphical symbol.

In an embodiment, the processing circuitry is further configured to generate the plurality of image frames for each authentication session.

In an embodiment, the processing circuitry is further configured to determine for each authentication session a respective position of the respective graphical symbol in the plurality of image frames and to arrange, for each of the plurality of graphical symbols, the respective first portion and the respective second portion of the respective graphical symbol based on the respective position of the respective graphical symbol.

In an embodiment, the processing circuitry is further configured to change, for each authentication session, the respective position of the respective graphical symbol in the plurality of image frames.

In an embodiment, the plurality of graphical symbols comprise a plurality of numerical digits.

In an embodiment, each respective graphical symbol of the plurality of graphical symbols comprises a plurality of pixels, wherein the first portion of the respective graphical symbol comprises a respective first subset of the plurality of pixels and the second portion of the respective graphical symbol comprises a respective second subset of the plurality of pixels.

According to a second aspect an authentication server for performing an authentication session with an electronic communication device is provided. In an embodiment, the authentication server may be a cloud server.

The authentication server comprises a processing circuitry configured to generate a random integer offset value for the authentication session and a communication interface configured to send the random integer offset value for the authentication session to the electronic communication device. The communication interface is further configured to receive obfuscated integer values from the electronic communication device and the processing circuitry is further configured to deobfuscate the obfuscated integer values based on the random integer offset value and to further process the authentication session based on the deobfuscated integer values.

In an embodiment, the authentication server further comprises a random number generator and the processing circuitry is configured to generate the random integer offset value based on a random number generated by the random number generator. In an embodiment, the a random number generator may be implemented by the processing circuitry.

In an embodiment, the processing circuitry is configured to deobfuscate the obfuscated integer values by subtracting the random integer offset value from the respective obfuscated integer value.

In an embodiment, the processing circuitry is configured to generate the random integer offset value in a range from 1 to 9 and/or in a range from -1 to -9.

In an embodiment, the processing circuitry is configured to generate at least one further random integer offset value and to deobfuscate at least one of the plurality of integer values based on the at least one further random integer offset value.

According to a third aspect an electronic payment system is provided, comprising an electronic communication device according to the first aspect and an authentication server according to the second aspect.

According to a fourth aspect a method for performing an authentication session between an electronic communication device and an authentication server is provided. The method comprises the steps of:
generating a random integer offset value by the authentication server;
generating by a PIN pad of the electronic communication device a respective PIN pad signal, in response to each of a sequence of operations of the PIN pad by a user of the device;
determining based on each PIN pad signal a respective integer value;
obfuscating the respective integer value by adding the random integer offset value to the respective integer value;
transmitting the obfuscated integer values to the authentication server; and deobfuscating the obfuscated integer values based on the random integer offset value by the authentication server for processing the authentication session.

The method according to the fourth aspect of the present invention can be performed by the electronic communication device according to the first aspect and the authentication server according to the second aspect of the present invention. Thus, further features of the method according to the fourth aspect of the present invention result directly from the functionality of the electronic communication device according to the first aspect and the authentication server according to the second aspect of the present invention as well as their different embodiments described above and below.

According to a fifth aspect, a computer program product comprising a non-transitory computer-readable storage medium for storing program code which causes a computer or a processor to perform the method according to the fourth aspect, when the program code is executed by the computer or the processor, is provided.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an electronic payment system according to an embodiment, including an electronic communication device according to an embodiment and an authentication server according to an embodiment;
Fig. 1a shows a schematic diagram illustrating in more detail an electronic communication device according to an embodiment in the form of a smartphone;
Fig. 2 shows a schematic diagram illustrating an electronic payment system according to a further embodiment, including an electronic communication device according to an embodiment and an authentication server according to an embodiment;
Fig. 3 shows a schematic diagram illustrating an electronic payment system according to a further embodiment, including an electronic communication device according to an embodiment and an authentication server according to an embodiment;
Fig. 4 shows a signaling diagram illustrating the process flow implemented by the components of an electronic payment system according to an embodiment,
Figs. 5a, 5b show schematically a first and a second image frame of a plurality of image frames displayed on a touch display of an electronic communication device according to an embodiment for performing a secure authentication procedure using a virtual PIN pad of the device;
Fig 5c shows schematically the visual impression of a user looking at the touch display of an electronic communication device according to an embodiment for performing a secure authentication procedure using a virtual PIN pad of the device; and
Fig. 6 shows a flow diagram illustrating steps of a method according to an embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

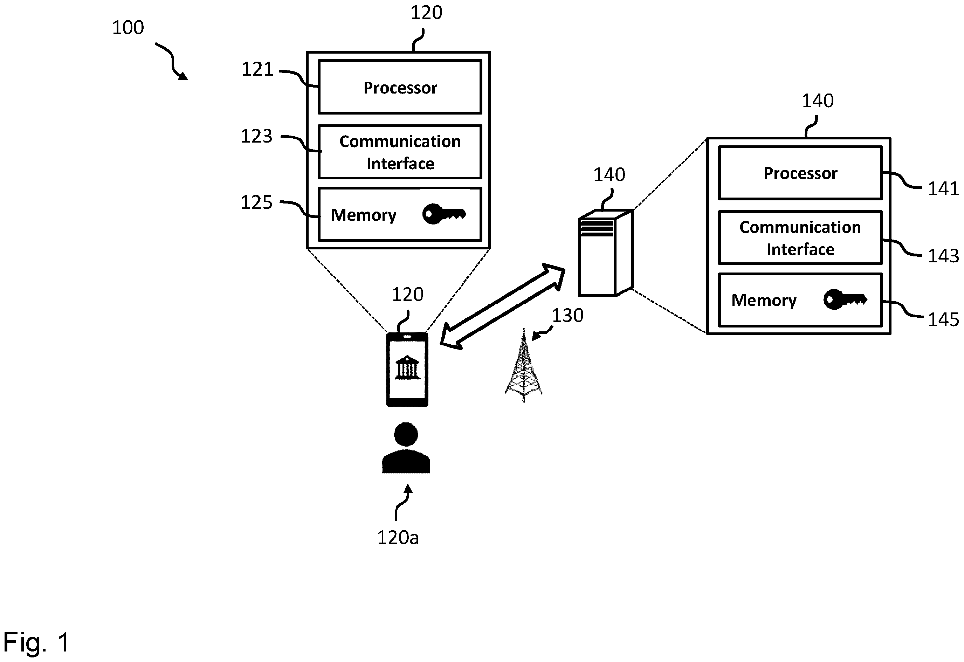

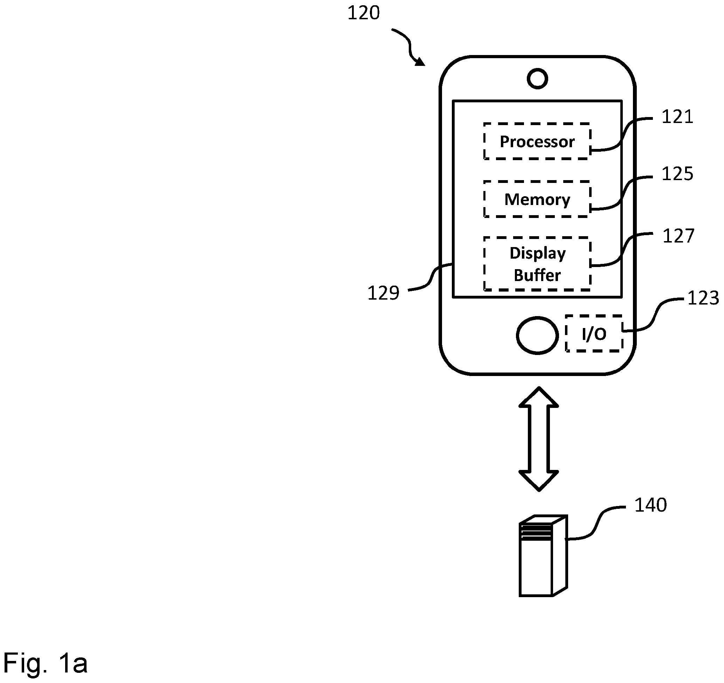

Figure 1 shows a schematic diagram illustrating an electronic payment system 100 according to an embodiment for processing an electronic payment transaction between a mobile electronic communication device 120 operated by a mobile user 120a and an authentication or payment server 140. The mobile electronic communication device 120 may be, for instance, a mobile phone 120, tablet computer 120 or the like operated by the user 120a. As illustrated in figure 1, the mobile electronic communication device 120 may comprise a processing circuitry 121, also referred to as processor 121, for processing data, a communication interface 123 for communicating with the other components of the payment system 100 and a memory 125 for storing data and cryptographic keys. Likewise, the authentication server 140 may comprise a processing circuitry 121, also referred to as processor 141, for processing data, a communication interface 143 for communicating with the other components of the payment system 100 and a memory 145 for storing data and cryptographic keys. As illustrated in figure 1, the mobile electronic communication device 120 may be configured to communicate with the authentication server 140 via a wireless and/or wired communication network 130.

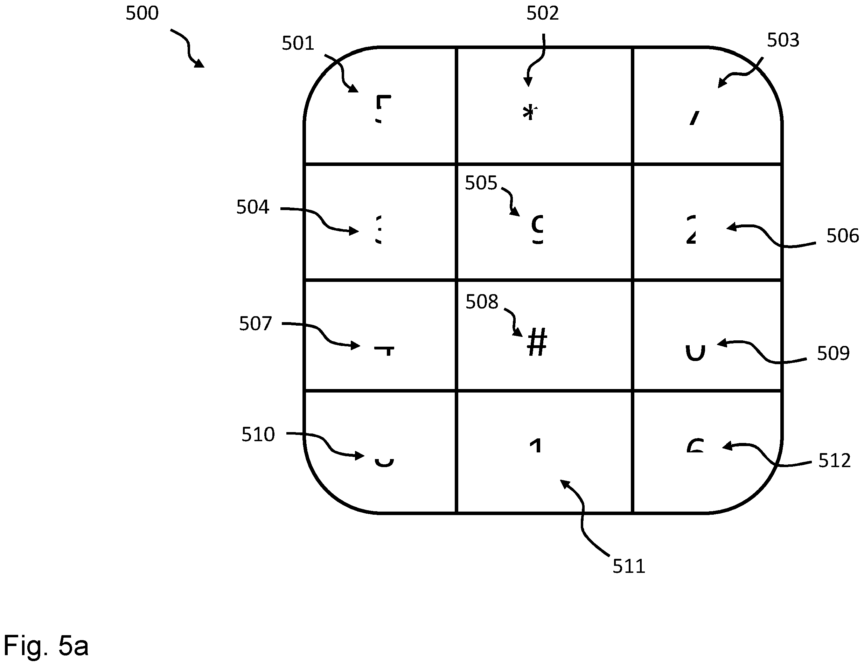

Figure 1a shows a schematic diagram illustrating in more detail the mobile electronic communication device 120 according to an embodiment in the form of a smartphone 120. As illustrated in figure 1a, in addition to the processor 121, the communication interface 123 and the memory 125 the smartphone 120 may comprise a display buffer 127 and a touch display 129 for displaying a virtual PIN pad 500, as will be described in more detail below in the context of figures 5a-c.

As will be described in more detail below, the processing circuitry 141 of the authentication server is configured to generate a random integer offset value and to transmit the random integer offset value by means of its communication interface 143 to the electronic communication device 120. A PIN pad, in particular the virtual PIN pad 500 of the mobile electronic communication device 120 is configured to generate, in response to each of a sequence of operations of the PIN pad 500 by the user 120a, a respective PIN pad signal. The processing circuitry 121 of the electronic communication device 120 is configured to generate based on each PIN pad signal a respective integer value, in particular in the range from 0 to 9, and to obfuscate the respective integer value by adding the random integer offset value, which may be positive or negative, to the respective integer value for obtaining a respective obfuscated integer value. For instance, in case the plurality of entered integer values are "1", "2", "3" and "4" and the random integer offset value has a value of 5, the obfuscated integer values are "6", "7", "8" and "9". In an embodiment, the memory 125 of the electronic communication device 120 may store the obfuscated integer values during the authentication session.

Once a pre-defined number of obfuscated integer values have been obtained, such as 4 or 6 obfuscated integer values, the communication interface 123 of the electronic communication device is configured to transmit the obfuscated integer values to the authentication server 140. The processing circuitry 141 of the authentication server 140 is configured to deobfuscate the obfuscated integer values received from the electronic communication device 120 by performing the inverse operation, i.e. subtracting the random integer offset value from the plurality of obfuscated integer values. Based on the deobfuscated integer values the authentication server 140 may authenticate the mobile electronic communication device 120 and authorize the payment transaction.

In an embodiment, the authentication server 140 may comprise a random number generator and the processing circuitry 141 of the authentication server 140 may be configured to generate the random integer offset value based on a random number generated by the random number generator. In an embodiment, the random number generator may be implemented by the processing circuitry 141 of the authentication server 140. In an embodiment, the processing circuitry 141 is configured to generate the random integer offset value in a range from 1 to 9 and/or in a range from -1 to -9.

In an embodiment, the processing circuitry 121 of the mobile electronic communication device 120 is further configured to encrypt the obfuscated integer values and the communication interface 123 is configured to transmit the encrypted obfuscated integer values to the authentication server 140.

In an embodiment, the processing circuitry 121 of the mobile electronic communication device 120 is configured to obfuscate the respective integer value by adding the random integer offset value, which may be positive or negative, to the respective integer value and performing a modulo operation, in particular a modulo operation using the modulus 10, such that the obfuscated integer values are positive integer values in the range from 0 to 9.

In an embodiment, the processing circuitry 141 of the authentication server 140 may generate a new random integer offset value for each authentication session. More specifically, in an embodiment, the processing circuitry 141 of the authentication server is configured to generate for a further authentication session for a further payment transaction a further random integer offset value and transmit the further random integer offset value to the electronic communication device 120. The PIN pad 500 of the electronic communication device 120 is configured to generate, in response to each of a further sequence of operations of the PIN pad 500 by the user 120a, a further respective PIN pad signal, wherein the processing circuitry 121 of the electronic communication device 120 is further configured to generate based on each further PIN pad signal a respective further integer value, in particular in the range from 0 to 9, and to obfuscate the respective further integer value by adding the further random integer offset value, which may be positive or negative, to the respective further integer value for obtaining a respective obfuscated further integer value. Once a pre-defined number of obfuscated further integer values have been obtained, the communication interface 123 of the electronic communication device 120 is configured to transmit the obfuscated further integer values to the authentication server 140. The processing circuitry 141 of the authentication server 140 is configured to deobfuscate the obfuscated further integer values for processing the further authentication session.

In an embodiment, the processing circuitry 121 of the mobile electronic communication device 120 may use more than one random integer offset values for obfuscating and deobfuscating the digits of a PIN. More specifically, in an embodiment, the electronic communication device 120 is configured to receive at least one further random integer offset value from the authentication server 140 for the authentication session and to obfuscate at least one of the plurality of integer values based on the at least one further random integer offset value.

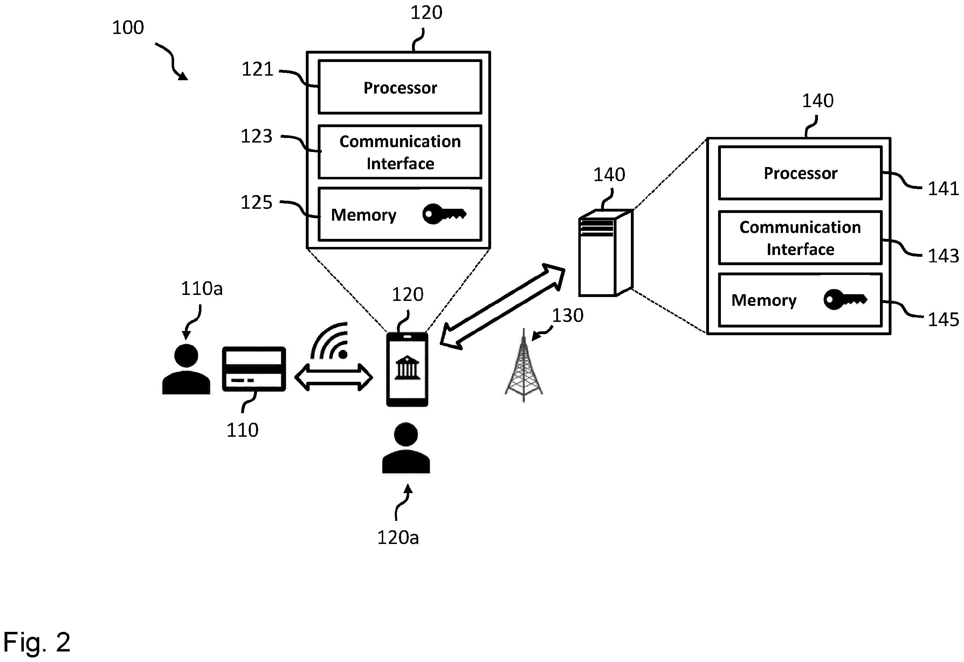

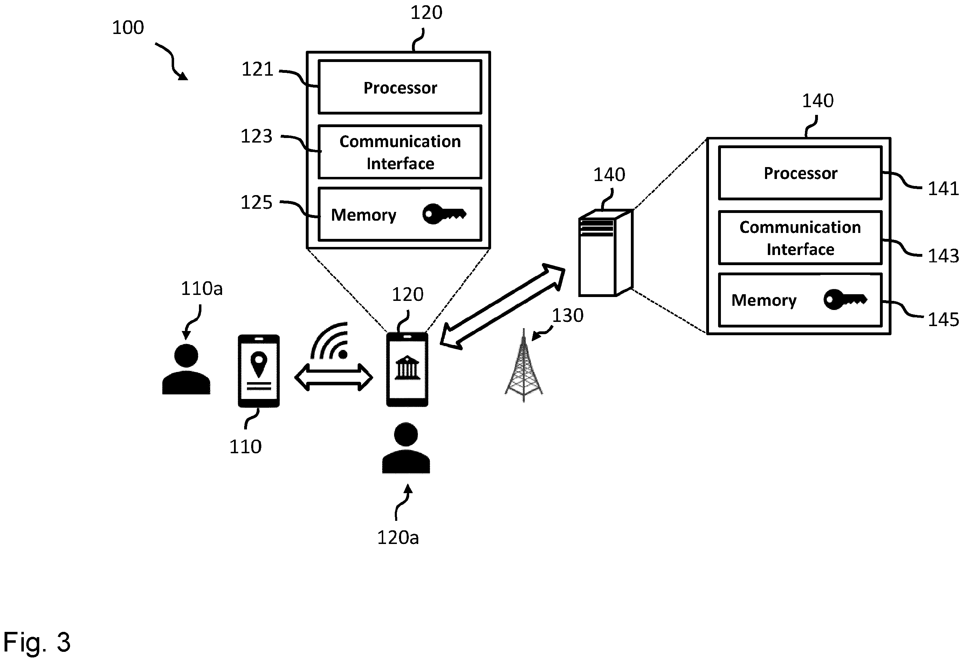

Further embodiments of the electronic payment system 100 are shown in figures 2 and 3. In the embodiment shown in figure 2, the mobile electronic communication device 120 is a mobile merchant communication device 120 operated by a merchant 120a for processing a payment transaction with a payment card 110 of a customer 110a. In the embodiment shown in figure 3, the mobile electronic communication device 120 is a mobile merchant communication device 120 operated by a merchant 120a for processing a payment transaction with a smartphone 110 of a customer 110a. In an embodiment, the communication interface 123 of the mobile merchant communication device 120 may comprise an NFC interface for communicating with the payment card or smartphone 110 of the customer 110a.

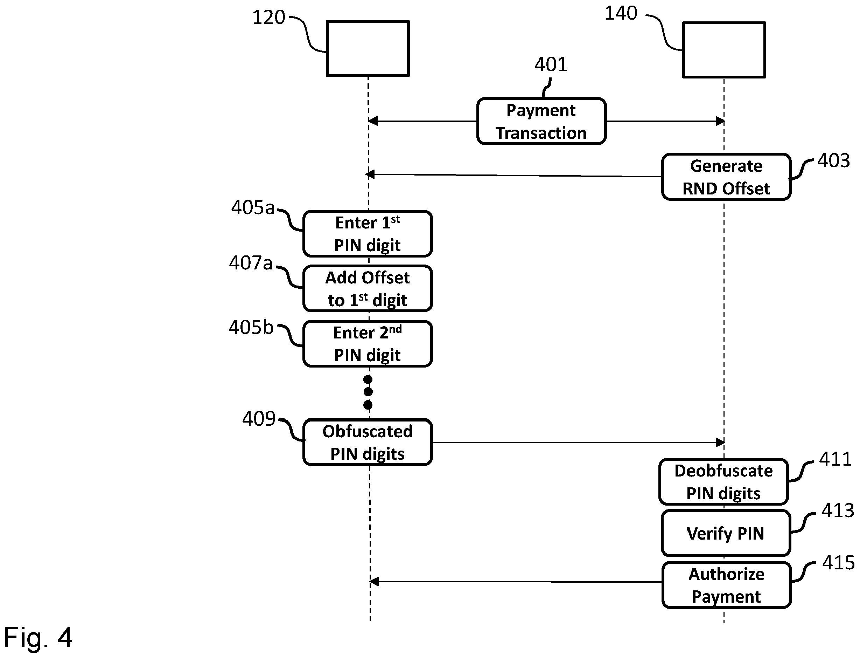

Figure 4 shows a signaling diagram illustrating the interaction of the mobile electronic communication device, in particular smartphone 120 and the authentication server 140. In figure 4 the following steps are illustrated, some of which already have been described in the context of figures 1, 1a, 2 and 3 above.

In step 401 of figure 4, the electronic communication device 120 and the authentication server 140 start a payment transaction. In an embodiment, the electronic communication device 120 may start executing a payment application which initiates the payment transaction by establishing communication with the authentication server 140. In an embodiment, the payment application may ask the user 120a of the electronic communication device 120 to enter a PIN.

In step 403 of figure 4, the processing circuitry 141 of the authentication server 140 generates a random integer offset value, which may be positive or negative, and transmits the random integer offset value to the electronic communication device 120.

In step 405a of figure 4, the user 120a of the electronic communication device 120 enters a first PIN digit into the PIN pad 500. As already described above, in response thereto, the PIN pad 500 generates a first PIN pad signal. Based on the first PIN pad signal the processing circuitry 121 generates a first integer value in the range from 0 to 9 corresponding to the first PIN digit entered by the user 120a.

In step 407a of figure 4, the processing circuitry 121 obfuscates the first integer value by adding the random integer offset value to the first integer value for obtaining a first obfuscated integer value, which may be stored in the memory 125 of the electronic communication device 120.

Steps 405a and 407a are repeated as exemplary illustrated by step 405b until all PIN digits, such as 4 or 6 PIN digits have been entered by the user 120a.

Once this pre-defined number of PIN digits have been entered and, thus, obfuscated integer values have been obtained, in step 409 of figure 4 the communication interface 123 transmits the obfuscated integer values to the authentication server 140.

In step 411 of figure 4, the processing circuitry 141 of the authentication server 140 deobfuscates the obfuscated integer values received from the electronic communication device by performing the inverse operation of step 407a (and repeated steps of step 407a), i.e. subtracting the random integer offset value from the respective obfuscated integer value.

In step 413 of figure 4, the authentication server 140 verifies the deobfuscated integer values.

In step 415 of figure 4, if the PIN verification in step 413 is successful, the authentication server 140 authorizes the payment and sends a corresponding message to the electronic communication device 120.

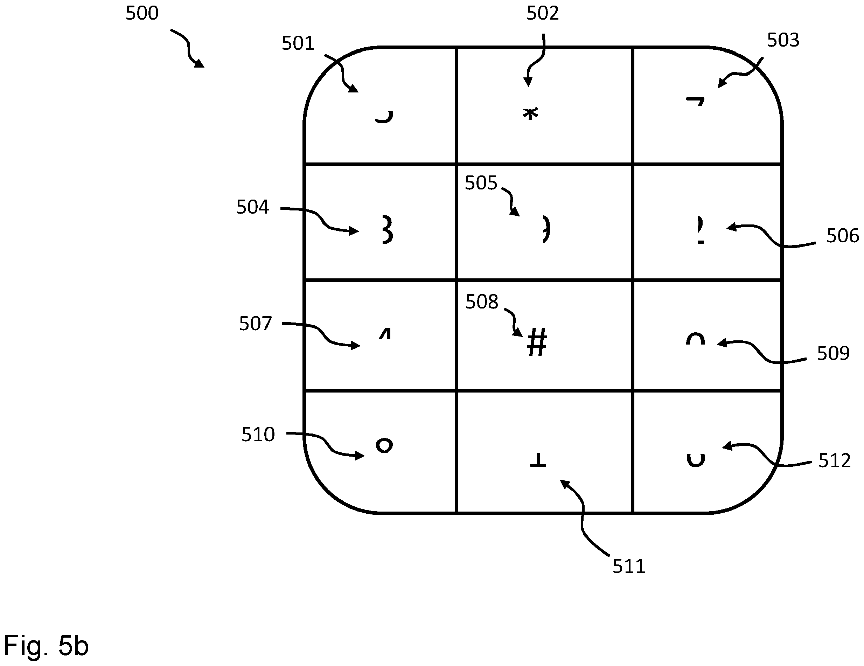

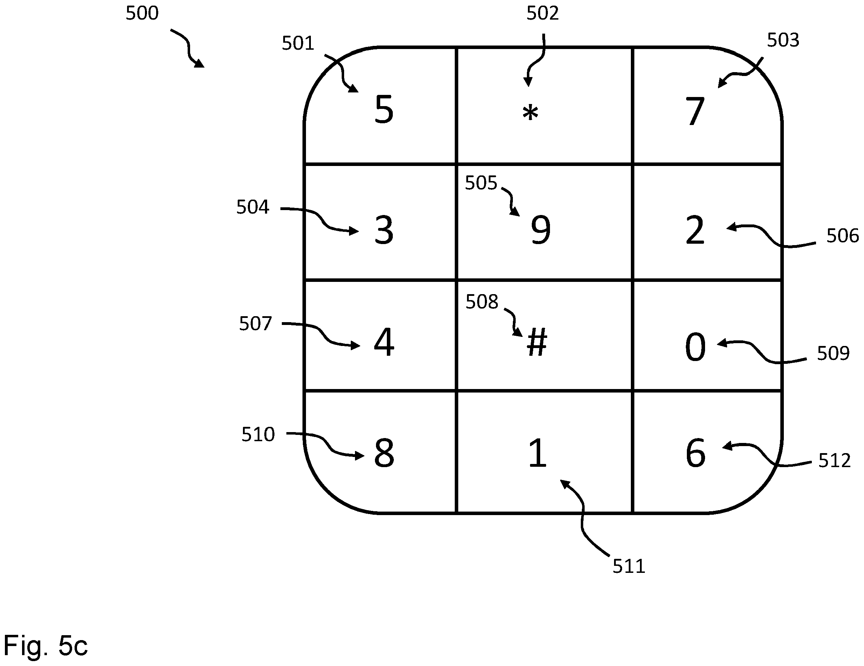

As already described above, in an embodiment, the electronic communication device 120, e.g. smartphone 120 may comprise a touch display 129 for performing the secure authentication operation using a virtual PIN pad 500 including a plurality of graphical symbols 501-512 (further illustrated in figures 5a, 5b and 5c). In the embodiment illustrated in figures 5a, 5b and 5c the plurality of graphical symbols 501-512 comprise the single numerical digits "0", "1", "2", "3", "4", "5", "6", "7", "8", "9" as well as the symbols "#" and "*". As will be appreciated, a PIN, TAN, eCode or similar kind of number may be defined by a sequence of the single numerical digits "0", "1", "2", "3", "4", "5", "6", "7", "8", "9".

In an embodiment, the touch display 129 of the mobile electronic communication device 120 is configured to sequentially display a plurality of image frames, including a first image frame and a second image frame. Figure 5a shows schematically an exemplary first image frame of the plurality of image frames displayed on the touch display 129 of the mobile electronic communication device 120. As can be taken from figure 5a, the first image frame, for each of the plurality of graphical symbols 501-512 of the virtual PIN pad 500, comprises only a first portion of the respective graphical symbol 501-512 of the virtual PIN pad 500. For instance, for the graphical symbol "9" 505, the first image frame comprises, i.e. shows only a left portion thereof.

Figure 5b shows schematically an exemplary second image frame of the plurality of image frames displayed on the touch display 129 of the mobile electronic communication device 120. As can be taken from figure 5b, the second image frame, for one or more of the plurality of graphical symbols 501-512 of the virtual PIN pad 500, comprises only a second portion different to the first portion of the respective graphical symbol 501-512 of the virtual PIN pad 500. For instance, for the graphical symbol "9" 505, the second image frame comprises, i.e. shows only a right portion thereof.

In an embodiment, each respective graphical symbol of the plurality of graphical symbols 501-512 of the virtual PIN pad 500 comprises a plurality of pixels, wherein the first portion of the respective graphical symbol 501-512 of the virtual PIN pad 500 (shown by way of example in figure 5a) comprises a respective first subset of the plurality of pixels and the second portion of the respective graphical symbol 501-512 of the virtual PIN pad 500 (shown by way of example in figure 5b) comprises a respective second subset of the plurality of pixels different from the first subset of the plurality of pixels.

As will be appreciated, for the exemplary first and second image frames shown in figures 5a and 5b, the respective graphical symbol 501-512 of the virtual PIN pad 500 is a combination of the first portion and the second portion of the respective graphical symbol 501-512 of the virtual PIN pad 500. By displaying these images frames in sequence the touch display 129 of the electronic communication device 120 is configured to generate the visual impression to the user illustrated in figure 5c, i.e. a complete virtual PIN pad 500 comprising the plurality of graphical symbols 501-512. In an embodiment, the touch display 129 of the electronic communication device 120 is further configured to sequentially display the plurality of image frames with a refresh rate of at least 24 image frames per second. In an embodiment, the processing circuitry 121 of the electronic communication device 120 is configured to store the plurality of image frames in a display buffer 127, wherein the touch display 129 is configured to retrieve the plurality of image frames from the display buffer 127.

In an embodiment, the plurality of image frames displayed by the touch display 129 of the electronic communication device 120 may comprise further image frames that for one or more of the plurality of graphical symbols 501-512 of the virtual PIN pad 500, comprises a further portion of the respective graphical symbol 501-512 different to the first and second portion thereof.

In an embodiment, the plurality of image frames displayed by the touch display 129 of the electronic communication device 120 may comprise further image frames, such as a third image frame, wherein the third image frame, for one or more of the plurality of graphical symbols 501-512 of the virtual PIN pad 500, comprises, i.e. shows only the first portion of the respective graphical symbol 501-512 of the virtual PIN pad 500. In other words, further image frames of the plurality of image frames may be identical to the first image frame or the second image frame.

In an embodiment, the plurality of image frames may be generated by the processing circuitry 121 of the electronic communication device 120 for each PIN authentication session. In an embodiment, the processing circuitry 121 is configured to determine for a given PIN authentication session a respective position of the respective graphical symbol 501-512 in all of the plurality of image frames, wherein the processing circuitry 121 is configured to arrange, for each of the plurality of graphical symbols 501-512 of the virtual PIN pad 500, the respective first portion and the respective second portion of the respective graphical symbol 501-512 of the virtual PIN pad 500 based on the respective position of the respective graphical symbol 501-512 determined for the current PIN authentication session. In an embodiment, the processing circuitry 121 of the electronic communication device 120 is further configured to change, for a new PIN authentication session, the respective position of the respective graphical symbol 501-512 of the virtual PIN pad 500 in the plurality of image frames, i.e. to scramble the virtual PIN pad 500 for each new PIN authentication session. Additionally or alternatively, the processing circuitry 121 of the electronic communication device 120 may be further configured to change, for a new PIN authentication session, the position and/or the size of the virtual PIN pad 500 in the plurality of image frames. For instance, in an embodiment, the virtual PIN pad 500 for a first PIN authentication session might be located in the lower right portion of the plurality of images frames, while for a subsequent second PIN authentication session the virtual PIN pad 500 might be located in the upper left portion of the plurality of images frames. Moreover, for the second PIN authentication session the virtual PIN pad 500 may have, for instance, twice the size as for the first PIN authentication session.

In a further embodiment, the plurality of image frames displayed by the touch display 129 of the electronic communication device 120 comprises further image frames, such as a fourth image frame, wherein the fourth image frame, for one or more of the plurality of graphical symbols 501-512 of the virtual PIN pad 500, comprises a fourth portion of a different graphical symbol of the plurality of graphical symbols 501-512 of the virtual PIN pad 500. For instance, in an embodiment, for the graphical symbol "9" 505, the fourth image frame may comprise, i.e. shows only a portion of a different graphical symbol, for instance, the graphical symbol "5" (at the location of the graphical symbol "9" 505). In a further embodiment, the plurality of image frames comprises a fifth image frame, wherein the fifth image frame, for at least one of the plurality of graphical symbols 501-512 of the virtual PIN pad 500, comprises a portion of a random graphic symbol of a plurality of further graphical symbols, such as randomly chosen portions of the letters "A" to "Z" or other known or randomly generated graphical symbols. In other words, in an embodiment, some image frames, such as the fifth image frame, may be mixed into the plurality of image frames that at a respective position of the virtual PIN pad 500 (different to the first, second and third image frames) do not contain portions of the respective graphical symbol 501-512 associated with that current position of the virtual PIN pad 500 but a portion of a randomly chosen further known or random graphical symbol (different to the plurality of graphical symbols 501-512 of the virtual PIN pad 500). The portion of a randomly chosen further known or random graphical symbol may be, for instance, a rotated portion of one of the plurality of graphical symbols 501-512 of the virtual PIN pad 500. Advantageously, this allows increasing the noise for a potential attacker trying to obtain information about the authentication operation. On average the number of these "noise" image frames, such as the fourth image frame, should be smaller than the number of image frames identical or similar to the first, second and third image frame.

In response to the sequence of image frames displayed by the touch display 129 and the visual impression of the user illustrated in figure 5c, the user may select, i.e. enter one or more of the plurality of graphical symbols 501-512 of the virtual PIN pad 500 by touching the respective locations on the touch display 129. Thus, in an embodiment, the touch display 129 of the electronic communication device 120 is further configured to generate, in response to such a touch operation of the touch display 129 by the user, a PIN pad signal. As already described above, the processing circuitry 121 of the electronic communication device 120, in turn, is configured to associate each PIN pad signal provided by the touch display 129 with one of the plurality of graphical symbols 501-512 of the virtual PIN pad 500 for performing the PIN authentication.

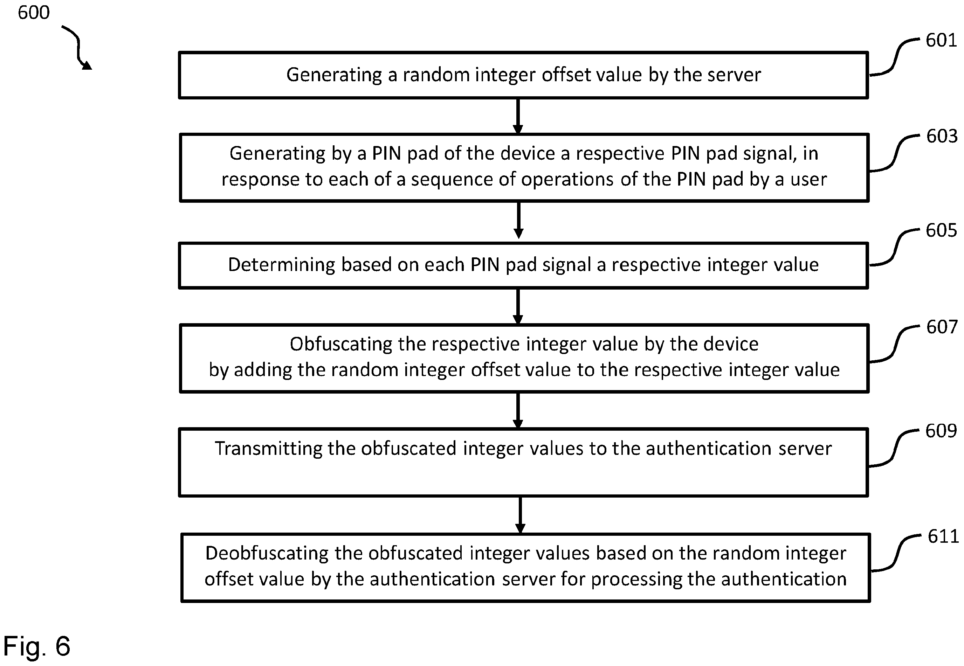

Figure 6 shows a flow diagram illustrating steps of a method 600 for performing an authentication session between the electronic communication device 120 and the authentication server 140 according to an embodiment. The method 600 comprises the steps of:
generating 601 a random integer offset value by the authentication server;
generating 603 by the PIN pad 500 of the electronic communication device 120 a respective PIN pad signal, in response to each of a sequence of operations of the PIN pad by the user 120a;
determining 605 based on each PIN pad signal a respective integer value, in particular in the range from 0 to 9;
obfuscating 607 the respective integer value by adding the random integer offset value (received from the authentication server 140), which may be positive or negative, to the respective integer value for obtaining a respective obfuscated integer value;
transmitting 609 the obfuscated integer values to the authentication server (140); and
deobfuscating 611 the deobfuscated integer values based on the random integer offset value by the authentication server 140 for processing the authentication session.

The method 600 can be performed by the electronic communication device 120, e.g. smartphone 120 in communication with the authentication server 140. Thus, further features of the method 600 result directly from the structure and functionality of the electronic communication device 120 and the authentication server 140 as well as their different embodiments described above.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An electronic communication device (120) for performing an authentication session, wherein the electronic communication device (120) comprises:
a communication interface (123) configured to receive for the authentication session a random integer offset value from an authentication server (140);
a PIN pad (500) configured to generate, in response to each of a sequence of operations of the PIN pad (500) by a user (120a), a respective PIN pad signal; and
a processing circuitry (121) configured to generate based on each PIN pad signal a respective integer value and to obfuscate the respective integer value by adding the random integer offset value to the respective integer value;
wherein the communication interface (123) is further configured to transmit the obfuscated integer values to the authentication server (140) for processing the authentication session.

2. The electronic communication device (120) of claim 1, wherein the processing circuitry (121) is further configured to encrypt the obfuscated integer values and wherein the communication interface is configured to transmit the encrypted obfuscated integer values to the authentication server (140).

3. The electronic communication device (120) of claim 1 or 2, wherein the electronic communication device (120) further comprises a memory (125) configured to store the obfuscated integer values during the authentication session.

4. The electronic communication device (120) of any one of the preceding claims, wherein the processing circuitry (121) is configured to obfuscate the respective integer value by adding the random integer offset value to the respective integer value and performing a modulo operation.

5. The electronic communication device (120) of any one of the preceding claims, wherein the communication interface (123) is configured to receive from the authentication server (140) for a further authentication session a further random integer offset value;
wherein the PIN pad (500) is further configured to generate, in response to each of a further sequence of operations of the PIN pad (500) by the user (120a), a respective further PIN pad signal;
wherein the processing circuitry (121) is further configured to generate based on each further PIN pad signal a respective further integer value and to obfuscate the respective further integer value by adding the further random integer offset value to the respective further integer value;
wherein the communication interface (123) is further configured to transmit the obfuscated further integer values to the authentication server (140) for processing the further authentication session.

6. The electronic communication device (120) of any one of the preceding claims, wherein the electronic communication device (120) comprises a touch display (129) and wherein the PIN pad (500) is a virtual PIN pad (500) displayed on the touch display (129).

7. The electronic communication device (120) of claim 6, wherein the virtual PIN pad (500) comprises a plurality of graphical symbols (501-512) and wherein the touch display (129) is configured to sequentially display a plurality of image frames, including a first image frame and a second image frame, wherein the first image frame, for each of the plurality of graphical symbols (501-512), comprises a first portion of the respective graphical symbol (501-512) and wherein the second image frame, for one or more of the plurality of graphical symbols (501-512), comprises a second portion of the respective graphical symbol (501-512).

8. The electronic communication device (120) of claim 6 or 7, wherein the processing circuitry (121) is further configured to change, for each authentication session, a position and/or a size of the virtual PIN pad (500) displayed by the touch display (129).

9. An authentication server (140) for performing an authentication session with an electronic communication device (120), wherein the authentication server (140) comprises:
a processing circuitry (141) configured to generate a random integer offset value for the authentication session; and
a communication interface (143) configured to send the random integer offset value for the authentication session to the electronic communication device (120);
wherein the communication interface (143) is further configured to receive obfuscated integer values from the electronic communication device (120); and
wherein the processing circuitry (141) is further configured to deobfuscate the obfuscated integer values based on the random integer offset value and to further process the authentication session based on the deobfuscated integer values,
wherein the processing circuitry (141) is configured to deobfuscate the obfuscated integer values by subtracting the random integer offset value from the respective obfuscated integer value.

10. The authentication server (140) of claim 9, wherein the authentication server (140) further comprises a random number generator and wherein the processing circuitry (141) is configured to generate the random integer offset value based on a random number generated by the random number generator.

11. The authentication server (140) of claim 9 or 10, wherein the processing circuitry (141) is configured to generate the random integer offset value in a range from 1 to 9 and/or in a range from -1 to -9.

12. The authentication server (140) of any one of claims 9 to 11, wherein the processing circuitry (141) is configured to generate at least one further random integer offset value and to deobfuscate at least one of the plurality of integer values based on the at least one further random integer offset value.

13. An electronic payment system (100), comprising:
an electronic communication device (120) according to any one of claims 1 to 8; and
an authentication server (140) according to any one of claims 9 to 12.

14. A method (600) for performing an authentication session between an electronic communication device (120) and an authentication server (140), wherein the method (600) comprises:
generating (601) a random integer offset value by the authentication server (140);
generating (603) by a PIN pad (500) of the electronic communication device (120) a respective PIN pad signal, in response to each of a sequence of operations of the PIN pad (500) by a user (120a);
determining (605) based on each PIN pad signal a respective integer value;
obfuscating (607) the respective integer value by adding the random integer offset value to the respective integer value;
transmitting (609) the obfuscated integer values to the authentication server (140); and
deobfuscating (611) the obfuscated integer values based on the random integer offset value by the authentication server (140) for processing the authentication session.

## Patentansprüche

1. Elektronische Kommunikationsvorrichtung (120) zum Durchführen einer Authentifizierungssitzung, wobei die elektronische Kommunikationsvorrichtung (120) umfasst:
eine Kommunikationsschnittstelle (123), die so konfiguriert ist, dass sie für die Authentifizierungssitzung einen zufälligen ganzzahligen Versatzwert von einem Authentifizierungsserver (140) empfängt;
ein PIN-Pad (500), das so konfiguriert ist, dass es in Reaktion auf jede einer Folge von Operationen des PIN-Pad (500) durch einen Benutzer (120a) ein entsprechendes PIN-Pad-Signal erzeugt; und
eine Verarbeitungsschaltung (121), die so konfiguriert ist, dass sie basierend auf jedem PIN-Pad-Signal einen jeweiligen ganzzahligen Wert erzeugt und den jeweiligen ganzzahligen Wert verschleiert, indem sie den zufälligen ganzzahligen Versatzwert zu dem jeweiligen ganzzahligen Wert addiert;
wobei die Kommunikationsschnittstelle (123) ferner so konfiguriert ist, dass sie die verschleierten ganzzahligen Werte an den Authentifizierungsserver (140) zum Verarbeiten der Authentifizierungssitzung überträgt.

2. Elektronische Kommunikationsvorrichtung (120) nach Anspruch 1, wobei die Verarbeitungsschaltung (121) ferner konfiguriert ist, um die verschleierten ganzzahligen Werte zu verschlüsseln, und wobei die Kommunikationsschnittstelle konfiguriert ist, um die verschlüsselten verschleierten ganzzahligen Werte an den Authentifizierungsserver (140) zu übertragen.

3. Elektronisches Kommunikationsgerät (120) nach Anspruch 1 oder 2, wobei das elektronische Kommunikationsgerät (120) ferner einen Speicher (125) umfasst, der konfiguriert ist, um die verschleierten ganzzahligen Werte während der Authentifizierungssitzung zu speichern.

4. Elektronisches Kommunikationsgerät (120) nach einem der vorhergehenden Ansprüche, wobei die Verarbeitungsschaltung (121) konfiguriert ist, den jeweiligen ganzzahligen Wert zu verschleiern, indem sie den zufälligen ganzzahligen Versatzwert zu dem jeweiligen ganzzahligen Wert addiert und eine Modulo-Operation durchführt.

5. Elektronisches Kommunikationsgerät (120) nach einem der vorhergehenden Ansprüche, wobei die Kommunikationsschnittstelle (123) konfiguriert ist, um von dem Authentifizierungsserver (140) für eine weitere Authentifizierungssitzung einen weiteren zufälligen ganzzahligen Versatzwert zu empfangen; wobei das PIN-Pad (500) ferner so konfiguriert ist, dass es in Reaktion auf jede einer weiteren Sequenz von Operationen des PIN-Pad (500) durch den Benutzer (120a) ein entsprechendes weiteres PIN-Pad-Signal erzeugt;
wobei die Verarbeitungsschaltung (121) ferner konfiguriert ist, basierend auf jedem weiteren PIN-Pad-Signal einen jeweiligen weiteren ganzzahligen Wert zu erzeugen und den jeweiligen weiteren ganzzahligen Wert zu verschleiern, indem der weitere zufällige ganzzahlige Versatzwert zu dem jeweiligen weiteren ganzzahligen Wert addiert wird;
wobei die Kommunikationsschnittstelle (123) ferner konfiguriert ist zum Übertragen der verschleierten weiteren ganzzahligen Werte an den Authentifizierungsserver (140) zum Verarbeiten der weiteren Authentifizierungssitzung.

6. Elektronisches Kommunikationsgerät (120) nach einem der vorhergehenden Ansprüche, wobei das elektronische Kommunikationsgerät (120) ein Touch-Display (129) umfasst und wobei das PIN-Pad (500) ein virtuelles PIN-Pad (500) ist, das auf dem Touch-Display (129) angezeigt wird.

7. Elektronisches Kommunikationsgerät (120) nach Anspruch 6, wobei das virtuelle PIN-Pad (500) eine Vielzahl von grafischen Symbolen (501-512) umfasst und wobei das Touch-Display (129) so konfiguriert ist, dass dies sequentiell eine Vielzahl von Einzelbildern anzeigt, umfassend einen ersten Bildrahmen und einen zweiten Bildrahmen, wobei der erste Bildrahmen für jedes der Vielzahl von grafischen Symbolen ( 501 - 512 ) einen ersten Abschnitt des jeweiligen grafischen Symbols (501 - 512) umfasst und wobei der zweite Bildrahmen für eines oder mehrere der mehreren grafischen Symbole (501-512) einen zweiten Abschnitt des jeweiligen grafischen Symbols (501-512) umfasst.

8. Elektronische Kommunikationsvorrichtung (120) nach Anspruch 6 oder 7, wobei die Verarbeitungsschaltung (121) ferner konfiguriert ist, für jede Authentifizierungssitzung eine Position und/oder eine Größe des virtuellen PIN-Pads (500) zu ändern, das durch das Touch-Display (129) angezeigt wird.

9. Authentifizierungsserver (140) zum Durchführen einer Authentifizierungssitzung mit einem elektronischen Kommunikationsgerät (120), wobei der Authentifizierungsserver (140) umfasst:
eine Verarbeitungsschaltung (141), die so konfiguriert ist, dass sie einen zufälligen ganzzahligen Versatzwert für die Authentifizierungssitzung erzeugt; und
eine Kommunikationsschnittstelle (143), die so konfiguriert ist, dass sie den zufälligen ganzzahligen Versatzwert für die Authentifizierungssitzung an das elektronische Kommunikationsgerät (120) sendet;
wobei die Kommunikationsschnittstelle (143) ferner so konfiguriert ist, dass sie verschleierte ganzzahlige Werte von der elektronischen Kommunikationsvorrichtung (120) empfängt; und
wobei die Verarbeitungsschaltung (141) ferner dazu konfiguriert ist, die verschleierten ganzzahligen Werte basierend auf dem zufälligen ganzzahligen Versatzwert zu entschleieren und die Authentifizierungssitzung basierend auf den entschleierten ganzzahligen Werten weiter zu verarbeiten,
wobei die Verarbeitungsschaltung (141) so konfiguriert ist, dass sie die verschleierten ganzzahligen Werte durch Subtrahieren des zufälligen ganzzahligen Versatzwerts von dem jeweiligen verschleierten ganzzahligen Wert entschleiert.

10. Authentifizierungsserver (140) nach Anspruch 9, wobei der Authentifizierungsserver (140) ferner einen Zufallszahlengenerator umfasst und wobei die Verarbeitungsschaltung (141) so konfiguriert ist, dass sie den zufälligen ganzzahligen Versatzwert basierend auf einer vom Zufallszahlengenerator erzeugten Zufallszahl erzeugt.

11. Authentifizierungsserver (140) nach Anspruch 9 oder 10, wobei die Verarbeitungsschaltung (141) so konfiguriert ist, dass sie den zufälligen ganzzahligen Versatzwert in einem Bereich von 1 bis 9 und/oder in einem Bereich von -1 bis -9 erzeugt.

12. Authentifizierungsserver (140) nach einem der Ansprüche 9 bis 11, wobei die Verarbeitungsschaltung (141) so konfiguriert ist, dass sie mindestens einen weiteren zufälligen ganzzahligen Versatzwert erzeugt und mindestens einen der Vielzahl von ganzzahligen Werten auf Basis eines weiteren zufälligen ganzzahligen Versatzwerts entschleiert.

13. Elektronisches Zahlungssystem (100), umfassend:
eine elektronische Kommunikationsvorrichtung (120) nach einem der Ansprüche 1 bis 8; und
einen Authentifizierungsserver (140) nach einem der Ansprüche 9 bis 12.

14. Verfahren (600) zum Durchführen einer Authentifizierungssitzung zwischen einem elektronischen Kommunikationsgerät (120) und einem Authentifizierungsserver (140), wobei das Verfahren (600) umfasst:
Erzeugen (601) eines zufälligen ganzzahligen Versatzwerts durch den Authentifizierungsserver (140);
Erzeugen (603) eines entsprechenden PIN-Pad-Signals durch ein PIN-Pad (500) der elektronischen Kommunikationsvorrichtung (120) als Reaktion auf jede einer Folge von Operationen des PIN-Pad (500) durch einen Benutzer (120a);
Bestimmen (605) basierend auf jedem PIN-Pad-Signal eines jeweiligen ganzzahligen Werts;
Verschleiern (607) des jeweiligen ganzzahligen Werts durch Addieren des zufälligen ganzzahligen Versatzwerts zu dem jeweiligen ganzzahligen Wert;
Übertragen (609) der verschleierten ganzzahligen Werte an den Authentifizierungsserver (140); und
Entschleieren (611) der verschleierten ganzzahligen Werte basierend auf dem zufälligen ganzzahligen Versatzwert durch den Authentifizierungsserver (140) zum Verarbeiten der Authentifizierungssitzung.

## Revendications

1. Dispositif de communication électronique (120) pour effectuer une session d'authentification, dans lequel le dispositif de communication électronique (120) comprend:
une interface de communication (123) configurée pour recevoir pour la session d'authentification une valeur de décalage entier aléatoire d'un serveur d'authentification (140);
un clavier PIN (500) configuré pour générer, en réponse à chacune d'une séquence d'opérations du clavier PIN (500) par un utilisateur (120a), un signal de clavier PIN respectif; et
un circuit de traitement (121) configuré pour générer sur la base de chaque signal de clavier PIN une valeur entière respective et pour masquer la valeur entière respective en ajoutant la valeur de décalage entier aléatoire à la valeur entière respective;
dans lequel l'interface de communication (123) est en outre configurée pour transmettre les valeurs entières masquées au serveur d'authentification (140) pour traiter la session d'authentification.

2. Dispositif de communication électronique (120) selon la revendication 1, dans lequel le circuit de traitement (121) est en outre configuré pour crypter les valeurs entières masquées et dans lequel l'interface de communication est configurée pour transmettre les valeurs entières masquées cryptées au serveur d'authentification (140).

3. Dispositif de communication électronique (120) selon la revendication 1 ou 2, dans lequel le dispositif de communication électronique (120) comprend en outre une mémoire (125) configurée pour stocker les valeurs entières masquées pendant la session d'authentification.

4. Dispositif de communication électronique (120) selon l'une quelconque des revendications précédentes, dans lequel le circuit de traitement (121) est configuré pour obscurcir la valeur entière respective en ajoutant la valeur de décalage entier aléatoire à la valeur entière respective et en effectuant une opération modulo.

5. Dispositif de communication électronique (120) selon l'une quelconque des revendications précédentes, dans lequel l'interface de communication (123) est configurée pour recevoir du serveur d'authentification (140) pour une autre session d'authentification une autre valeur de décalage entier aléatoire; dans lequel le clavier PIN (500) est en outre configuré pour générer, en réponse à chacune d'une autre séquence d'opérations du clavier PIN (500) par l'utilisateur (120a), un autre signal de clavier PIN respectif;
dans lequel le circuit de traitement (121) est en outre configuré pour générer sur la base de chaque autre signal de clavier PIN une autre valeur entière respective et pour masquer l'autre valeur entière respective en ajoutant l'autre valeur de décalage entier aléatoire à l'autre valeur entière respective;
dans lequel l'interface de communication (123) est en outre configurée pour transmettre les autres valeurs entières masquées au serveur d'authentification (140) pour traiter l'autre session d'authentification.

6. Dispositif de communication électronique (120) selon l'une quelconque des revendications précédentes, dans lequel le dispositif de communication électronique (120) comprend un écran tactile (129) et dans lequel le clavier PIN (500) est un clavier PIN virtuel (500) affiché sur l'écran tactile (129).

7. Dispositif de communication électronique (120) selon la revendication 6, dans lequel le clavier NIP virtuel (500) comprend une pluralité de symboles graphiques (501-512) et dans lequel l'écran tactile (129) est configuré pour afficher séquentiellement une pluralité de trames d'images, comprenant un premier cadre d'image et un deuxième cadre d'image, dans lequel le premier cadre d'image, pour chacun de la pluralité de symboles graphiques (501-512), comprend une première partie du symbole graphique respectif (501-512) et dans lequel le deuxième une trame d'image, pour un ou plusieurs de la pluralité de symboles graphiques (501-512), comprend une seconde partie du symbole graphique respectif (501-512).

8. Dispositif de communication électronique (120) selon la revendication 6 ou 7, dans lequel le circuit de traitement (121) est en outre configuré pour changer, pour chaque session d'authentification, une position et/ou une taille du clavier PIN virtuel (500) affiché par l'écran tactile (129).

9. Un serveur d'authentification (140) pour effectuer une session d'authentification avec un dispositif de communication électronique (120), dans lequel le serveur d'authentification (140) comprend:
un circuit de traitement (141) configuré pour générer une valeur de décalage entier aléatoire pour la session d'authentification; et
une interface de communication (143) configurée pour envoyer la valeur de décalage entier aléatoire pour la session d'authentification au dispositif de communication électronique (120);
dans lequel l'interface de communication (143) est en outre configurée pour recevoir des valeurs entières masquées du dispositif de communication électronique (120); et
dans lequel le circuit de traitement (141) est en outre configuré pour désobscurcir les valeurs entières masquées sur la base de la valeur de décalage entier aléatoire et pour traiter davantage la session d'authentification sur la base des valeurs entières désobscurcies,
dans lequel le circuit de traitement (141) est configuré pour désobscurcir les valeurs entières obscurcies en soustrayant la valeur de décalage entier aléatoire de la valeur entière obscurcie respective.

10. Serveur d'authentification (140) selon la revendication 9, dans lequel le serveur d'authentification (140) comprend en outre un générateur de nombres aléatoires et dans lequel le circuit de traitement (141) est configuré pour générer la valeur de décalage d'entier aléatoire sur la base d'un nombre aléatoire généré par le générateur de nombres aléatoires.

11. Serveur d'authentification (140) selon la revendication 9 ou 10, dans lequel le circuit de traitement (141) est configuré pour générer la valeur de décalage entier aléatoire dans une plage de 1 à 9 et/ou dans une plage de -1 à -9.

12. Serveur d'authentification (140) selon l'une quelconque des revendications 9 à 11, dans lequel le circuit de traitement (141) est configuré pour générer au moins une autre valeur de décalage entier aléatoire et pour désobscurcir au moins l'une de la pluralité de valeurs entières sur la base de la au moins une autre valeur de décalage entier aléatoire.

13. Un système de paiement électronique (100), comprenant:
un dispositif de communication électronique (120) selon l'une quelconque des revendications 1 à 8; et
un serveur d'authentification (140) selon l'une quelconque des revendications 9 à 12.

14. Procédé (600) pour effectuer une session d'authentification entre un dispositif de communication électronique (120) et un serveur d'authentification (140), dans lequel le procédé (600) comprend:
générer (601) une valeur de décalage entier aléatoire par le serveur d'authentification (140);
générer (603) par un clavier PIN (500) du dispositif de communication électronique (120) un signal de clavier PIN respectif, en réponse à chacune d'une séquence d'opérations du clavier PIN (500) par un utilisateur (120a);
déterminer (605) sur la base de chaque signal de clavier PIN une valeur entière respective;
obscurcir (607) la valeur entière respective en ajoutant la valeur de décalage entière aléatoire à la valeur entière respective;
transmettre (609) les valeurs entières masquées au serveur d'authentification (140); et
désobscurcir (611) les valeurs entières obscurcies sur la base de la valeur de décalage d'entier aléatoire par le serveur d'authentification (140) pour traiter la session d'authentification.
